# DEMANDE DE BREVET EUROPEEN

(11) **EP 1 905 913 A1**
(43) Date de publication de la demande: **02.04.2008**
(21) Numéro de dépôt: 06121158.7
(22) Date de dépôt: 22.09.2006
(51) Int. Cl.: E04B 2/10, E04B 2/20

(54) **Elément de construction avec nervures**

(71) Demandeur: Di Trapani, Agostino, 7100 La Louvière (BE)
(72) Inventeur: Di Trapani, Agostino, 7100 La Louvière (BE)
(74) Mandataire: Quintelier, Claude

(57) **Abrégé**

L'invention concerne un élément de construction 101,101',201,301 ayant une longueur l, une largeur d et une hauteur h avec des axes sensiblement perpendiculaires, où ladite longueur l est préférablement au moins égale à la largeur d. L'élément de construction comporte une première et une deuxième faces 111,112, sensiblement orientées dans des plans parallèles aux axes de la longueur l et la largeur d et écartées dans l'axe de la hauteur h, et une troisième et une quatrième faces 113,114, sensiblement orientées dans des plans parallèles aux axes de la largeur d et la hauteur h, et écartées dans l'axe de la longueur l. Ladite première face 111 comporte deux nervures 121,122 longitudinales et écartées dans l'axe de la largeur d par un premier creux 123. Chaque nervure 121,122 a une hauteur hₙᵢ de 5 à 17 mm, préférablement 7 à 8 mm, relativement au fond dudit premier creux 123. Ledit premier creux 123 est ouvert au moins sur ladite troisième face 113. L'invention concerne aussi un procédé de production par moulage dudit élément de construction 101,101',201,301, un procédé pour construire un mur avec une pluralité de tels éléments de construction 101,101',201,301, ainsi qu'un mur construit suivant ledit procédé de construction.

## Description

La présente invention se rapporte à un élément de construction ayant une longueur l, une largeur d et une hauteur h avec des axes sensiblement perpendiculaires, où ladite longueur I est préférablement au moins égale à la largeur d, et comportant :
a) une première face et une deuxième face sensiblement orientées dans des plans parallèles aux axes de la longueur I et de la largeur d, et séparées l'une de l'autre dans l'axe de la hauteur h, ladite première face comportant deux nervures orientées sensiblement parallèlement à l'axe de la longueur I, et séparées l'une de l'autre dans l'axe de la largeur d par un premier creux; et
b) une troisième face et une quatrième face, sensiblement orientées dans des plans parallèles aux axes de la largeur d et de la hauteur h, et séparées dans l'axe de la longueur I.

Conventionnellement, des éléments de construction, en général dans la forme de briques, blocs ou parpaings, sont superposés pour former un mur. Entre deux éléments de construction superposés on applique une couche de mortier pour lier les éléments de construction entre eux et ainsi former le mur. Le mortier utilisé est généralement composé de ciment, de sable et d'eau. La couche de mortier permet non seulement à lier les éléments de construction entre eux, mais aussi de compenser les tolérances dimensionnelles de fabrication des éléments de construction dans la maçonnerie. Le joint de mortier participe à l'obtention d'un aspect esthétique du mur devenu conventionnel.

Un inconvénient du procédé connu est que la couche de mortier posée entre deux éléments superposés est relativement fluide lorsqu'elle est posée, ce qui altère la stabilité du mur en construction. Ce n'est que lorsque le mortier devient dur et cohésif et qu'il remplit pleinement la fonction de lier les éléments de construction entre eux. Toutefois, le mortier peut prendre particulièrement longtemps à durcir entre des éléments de construction très peu absorbants en eau, tels que ceux à base de béton comprimé, dû à leur haute densité de matière supérieure à 2000 kg/m³. Le temps que le mortier met à durcir et le poids élevé des éléments de construction ralentissent la cadence à laquelle un maçon peut construire un mur. De plus, lors de la construction du mur, le mortier situé entre les rangées inférieures des éléments de construction va porter le poids des rangées supérieures. Si le maçon empile trop vite les éléments de construction en hauteur le poids des rangées supérieures devient trop élevé, il appliquera une trop forte pression sur le mortier, qui, n'ayant pas encore durci suffisamment, sera chassé de l'espace entre les rangées inférieures des éléments de construction déjà posées. Le mur va donc se tasser et risque même de flamber. Le manque de stabilité du mur en cours de maçonnerie va ainsi contraindre le maçon à devoir interrompre son travail afin de permettre au mortier de durcir d'abord.

Des éléments de construction ont été proposés, par exemple dans la demande de brevet britannique GB 2 247 702 A ou dans la demande de brevet français FR 2 689 542 A1, qui comportent des nervures longitudinales sur leur face supérieure. Dans ces deux documents, l'objet des nervures est celui de servir d'appui à d'autres éléments de construction semblables lorsque que ceux-ci sont superposés, afin d'équilibrer les éléments de construction entre eux, et d'éviter le tassement des joints entre les éléments de construction pendant que le mortier est encore fluide. Toutefois, l'usage de ces éléments de construction a l'inconvénient que, comme les nervures d'un élément de construction entrent directement en contact avec l'élément de construction supérieur ou inférieur et définissent donc l'épaisseur du joint, il est impossible pour le maçon de régler l'alignement en hauteur des éléments de construction d'une rangée en tenant compte des tolérances dimensionnelles de fabrication.

Le brevet britannique GB 507,594 propose un élément de construction avec des aires périphériques rehaussées de près de 9 mm (3/8 de pouce) sur les faces supérieure et inférieure de l'élément de construction, ainsi qu'une méthode de construction où chaque bloc n'entre pas directement en contact avec le bloc supérieur mais reste séparé au niveau de ces aires périphériques par une fine couche de mortier. Ceci permet donc le réglage de l'épaisseur du joint et donc de l'alignement des éléments de construction. Toutefois, cet élément de construction a une forme trop étriquée pour permettre une fabrication facile. En particulier, pour le produire par moulage il serait nécessaire d'employer un moule complexe et donc cher, et l'opération de démoulage serait lente et compliquée.

On a aussi proposé des éléments de construction avec des nervures sur leur face supérieure et des rainures sur leur face inférieure, les nervures étant destinées à venir s'encocher dans les rainures d'un élément de construction supérieur. Évidemment, une telle configuration limite le réglage de l'alignement latéral des éléments de construction puisque la largeur des rainures restreint le mouvement dans l'axe de la largeur d des nervures qu'y sont encochées.

La présente invention a donc comme objet de fournir un élément de construction de fabrication rapide et économique, et permettant au maçon de monter plus rapidement en hauteur en améliorant la stabilité du mur en construction.

À cette fin, dans l'élément de construction selon l'invention chaque nervure a une hauteur hₙᵢ située entre 5 et 17 mm, préférablement entre 7 et 8 mm, mesurée par rapport au fond dudit premier creux et en ce que ledit premier creux est ouvert au moins sur ladite troisième face.

Cette hauteur hₙᵢ des nervures est choisie pour qu'elle soit toujours inférieure à l'épaisseur du joint, de façon a ce que, dans un mur, une mince couche de mortier puisse rester entre chaque nervure et l'élément de construction qui lui est superposé, permettant l'ajustement de chaque élément de construction en alignement et en aplomb. Le fait que ledit premier creux soit ouvert au moins sur ladite troisième face permet de mouler ledit élément de construction dans un moule simple et de l'extraire dans un mouvement suivant un axe sensiblement longitudinal vers la quatrième face.

Préférablement, ladite deuxième face comporte deux protubérances séparées par un deuxième creux, dont chacune est disposée de façon à être opposée dans une direction parallèle à l'axe de la hauteur h à chaque fois à une des deux nervures, et lesdites deux surfaces de la deuxième face étant les surfaces de l'élément de construction. Cette configuration a l'avantage que ledit deuxième creux peut recevoir une partie du mortier du joint pendant la construction du mur, ce qui fera que le mortier opposera une résistance au cisaillement, et non seulement d'adhésion, aux forces latérales exercées sur le mur.

Préférablement, ledit deuxième creux a une largeur de entre 25 et 300 mm et/ou une profondeur maximale h_{c} entre 3 et 15 mm, ces dimensions étant particulièrement avantageuses pour incrémenter la résistance aux forces latérales d'un mur construit avec de tels éléments de construction.

Alternativement, ladite deuxième face comporte une surface sensiblement continue opposée dans l'axe de la hauteur h et enjambant les deux nervures. Un tel élément de construction peut être produit plus simplement qu'un élément de construction comportant ledit deuxième creux. Notamment quand cet élément de construction est produit par moulage, il pourra être produit avec un moule plus simple et donc moins coûteux.

Préférablement, ledit élément de construction comporte aussi une cinquième face et une sixième face, sensiblement orientées dans des plans parallèles aux axes de la hauteur h et la longueur l, et séparées l'une de l'autre dans l'axe de la largeur d, au moins une desdites nervures étant décalée par rapport à la cinquième ou sixième face par une distance dⱼ entre 10 et 15 mm dans l'axe de la largeur d. Ceci a l'avantage de former un faux joint horizontal apparent sur au moins une face visible du mur qui peut être rempli après la construction du mur avec un mortier de jointoiement sélectionné par exemple pour son aspect esthétique.

Avantageusement, une surface d'égouttage orientée sensiblement parallèlement à l'axe de la longueur I s'étend entre ladite au moins une desdites nervures et ladite cinquième ou sixième face, cette surface d'égouttage formant préférablement un angle α entre 5° et 15° avec l'axe de la largeur d. Cette surface d'égouttage permet de recevoir le surplus de mortier débordant de ladite nervure et d'éviter qu'il retombe sur au moins une face visible du mur.

Préférablement, ladite troisième face comporte au moins un troisième creux, ce qui permet d'alléger l'élément de construction. Ledit au moins un troisième creux peut éventuellement être traversant jusqu'à la quatrième face.

L'invention se rapporte aussi à un procédé pour produire ledit élément de construction par moulage. Les procédés de production par moulage de tels éléments de construction ne permettent généralement pas d'atteindre des tolérances dimensionnelles aussi réduites dans l'axe d'extraction de l'élément de construction du moule que dans les deux axes perpendiculaires. Comme conventionnellement les éléments de construction produits par moulage sont extraits de leurs moules dans la direction de leur axe de hauteur, la hauteur de chaque élément de construction produit avec le procédé conventionnel peut varier considérablement, par exemple jusqu'à 6 mm, ce qui complique l'alignement de chaque rangée d'éléments de constructions pendant la construction d'un mur. Il est donc un autre objet de cette invention d'obtenir des éléments de construction avec des tolérances dimensionnelles particulièrement réduites dans les axes de la hauteur h et la largeur d, pour pouvoir construire plus facilement des murs à l'aspect particulièrement régulier.

Pour ceci, et selon le procédé de production de la présente invention, ledit élément de construction est extrait d'un moule dans un mouvement orienté sensiblement suivant l'axe de la longueur I dudit élément de construction vers sa quatrième face. Ceci permet donc de produire ledit élément de construction simplement et facilement, tout en assurant des tolérances dimensionnelles de fabrication de l'élément de construction particulièrement réduites dans les axes de la hauteur h et la largeur d.

Préférablement, le procédé de production comporte une étape où du béton est amené sensiblement suivant l'axe de la longueur l dudit élément de construction à former dans ledit moule. Ceci permet de produire des éléments de construction en béton particulièrement économiques et solides.

Préférablement, le béton est comprimé dans le moule avec un pilon, ledit pilon se déplaçant sensiblement dans l'axe de la longueur I dudit élément de construction à former. Ceci permet de produire des éléments de construction encore plus solides.

L'invention se rapporte aussi à un procédé de construction d'un mur comportant une pluralité de tels éléments de construction dans lequel on superpose au moins partiellement un desdits éléments de construction et un autre desdits éléments de construction de façon à opposer la deuxième face de l'un élément de construction à la première face de l'autre élément de construction après avoir appliqué une masse de mortier entre le premier creux dudit autre élément de construction et la deuxième face dudit un élément de construction, afin d'obtenir un joint de mortier entre ledit premier creux de l'autre élément de construction et ladite deuxième face de l'un élément de construction.

Comme on a déjà décrit ci-dessus, un objet de la présente invention est d'assurer la stabilité du mur, tout en permettant le réglage des éléments de construction en alignement et en aplomb tant que le mortier reste fluide. Pour ceci, l'épaisseur hⱼ dudit joint de mortier est supérieure à la hauteur hₙᵢ des nervures dudit autre élément de construction, la masse de mortier débordant dudit premier creux de l'autre élément de construction pour former une fine couche de mortier entre la deuxième face de l'un élément de construction et lesdites nervures de l'autre élément de construction et afin de permettre un réglage de l'alignement et de l'aplomb des éléments de construction pendant que le mortier reste fluide tout en équilibrant les éléments de construction et évitant le tassement du joint.

Préférablement, un surplus de mortier débordant au-delà d'au moins une desdites nervures est ensuite retiré avec un instrument plat. Ceci permet d'obtenir des faux joints propres entre les éléments de construction.

Préférablement, un profilé avec une hauteur hp est placé à cheval sur chacune des deux nervures de l'autre élément de construction, ladite hauteur hp desdits profilés étant supérieure à l'hauteur hₙᵢ desdites nervures, et en ce que ladite masse de mortier est dosée en remplissant un espace entre les deux profilés avec du mortier et arasant ce mortier avec une truelle prenant appui sur lesdits deux profilés. Ceci permet même à un maçon peu expérimenté de doser parfaitement et avec facilité la quantité de mortier à placer entre l'un et l'autre élément de construction. Le lit de mortier est dosé, parfaitement réparti et plan, ce qui facilite grandement la mise en place et le réglage des éléments de construction.

Préférablement, lesdits deux profilés sont munis de bavettes destinées à être placées vers l'extérieur de chaque nervure pour recevoir un surplus de mortier lors de l'arasement. Ceci permet d'éviter que le surplus de mortier arasé tombe sur au moins une face visible du mur en construction.

Préférablement, chacun desdits deux profilés est muni d'au moins un ergot pour déplacer lesdits deux profilés dans l'axe de la longueur I de l'autre élément de construction à l'aide de ladite truelle. Ceci permet de facilement déplacer lesdits deux profilés sans déformer sensiblement la masse de mortier fraîchement arasée.

Préférablement, une poignée-massette est utilisée pour prendre au moins l'un élément de construction avant de le poser sur l'autre élément de construction, ladite poignée-massette comportant une première partie qui est au moins partiellement introduite dans le troisième creux de l'un élément de construction pour le soutenir. Ceci permet de manier des éléments de construction lourds avec aisance.

L'invention se rapporte aussi à un mur construit suivant ce procédé de construction.

Des détails concernant l'invention sont décrits ci-après de manière purement illustrative et non limitative en faisant référence aux dessins.
La figure 1 représente une vue en perspective d'un élément de construction selon un premier mode de réalisation;
la figure 2 représente une vue en perspective d'un élément de construction selon un deuxième mode de réalisation;
la figure 3 représente une vue en perspective d'un élément de construction selon un troisième mode de réalisation;
la figure 4 représente une coupe transversale de deux éléments de construction et une masse de mortier dans un procédé de construction d'un mur;
les figures 5a à 5c représentent le procédé de production d'un élément de construction;
la figure 6 représente une vue en perspective d'une rangée d'éléments de construction, une masse de mortier arasée et deux profilés dans un procédé de construction d'un mur; et
la figure 7 représente une poignée-massette pour la préhension, le transport, la dépose et le réglage d'éléments de construction.

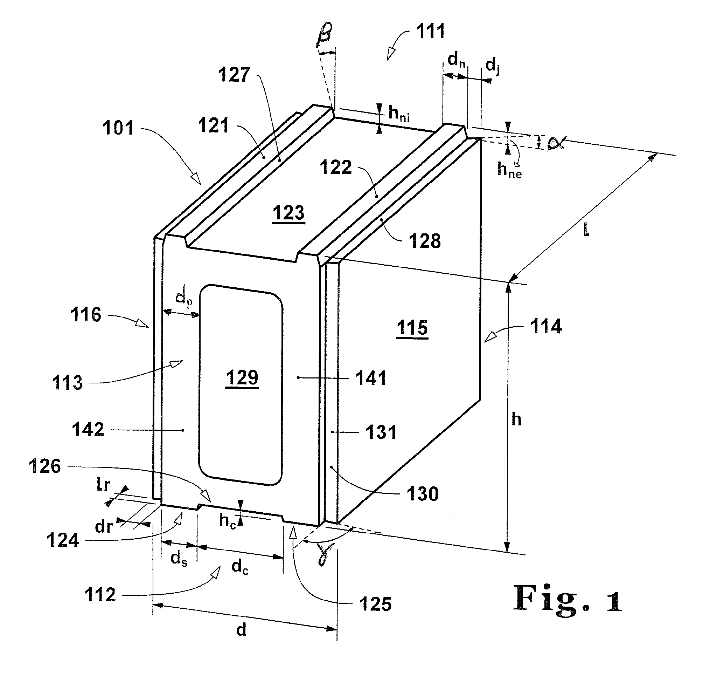

La figure 1 illustre un exemple d'élément de construction selon l'invention. Cet élément de construction 101 a une forme généralement parallélépipédique avec une longueur I, une largeur d et une hauteur h ayant des axes sensiblement perpendiculaires. La longueur I est supérieure tant à la largeur d comme à la hauteur h. L'élément de construction 101 comporte une première face 111 et une deuxième face 112 sensiblement orientées dans des plans parallèles aux axes de la longueur l et la largeur d, et écartées dans l'axe de la hauteur h. Dans l'exemple illustré, la première face 111 est une face supérieure et la deuxième face 112 est une face inférieure, mais elles peuvent aussi être inversées. En outre, l'élément de construction 101 comporte aussi une troisième face 113 et une quatrième face 114, sensiblement orientées dans des plans parallèles aux axes de la largeur d et la hauteur h, et écartées dans l'axe de la longueur l et une cinquième face 115 et une sixième face 116, sensiblement orientées dans des plans parallèles aux axes de la hauteur h et la longueur I, et écartées dans l'axe de la largeur d.

Sur sa première face 111, l'élément de construction 101 comporte deux nervures 121,122 orientées sensiblement parallèlement à l'axe de la longueur l, et écartées dans l'axe de la largeur d par un premier creux 123. Dans l'exemple illustré, chaque nervure 121 ou 122 a une hauteur hₙᵢ entre 7 et 8 mm relativement au fond dudit premier creux 123, quoique dans d'autres modes de réalisation cette hauteur hₙᵢ pourrait être entre 5 et 17 mm. Chacune des nervures 121,122 a aussi une largeur dₙ, préférablement entre 10 et 20 mm, les largeurs dₙ des deux nervures 121,122 étant préférablement sensiblement égales. Cette largeur permet de contrôler le tassement du mortier en état fluide en opposant une résistance à l'écoulement dépendant de la longueur du canal formé entre chaque nervure et l'élément de construction opposé.

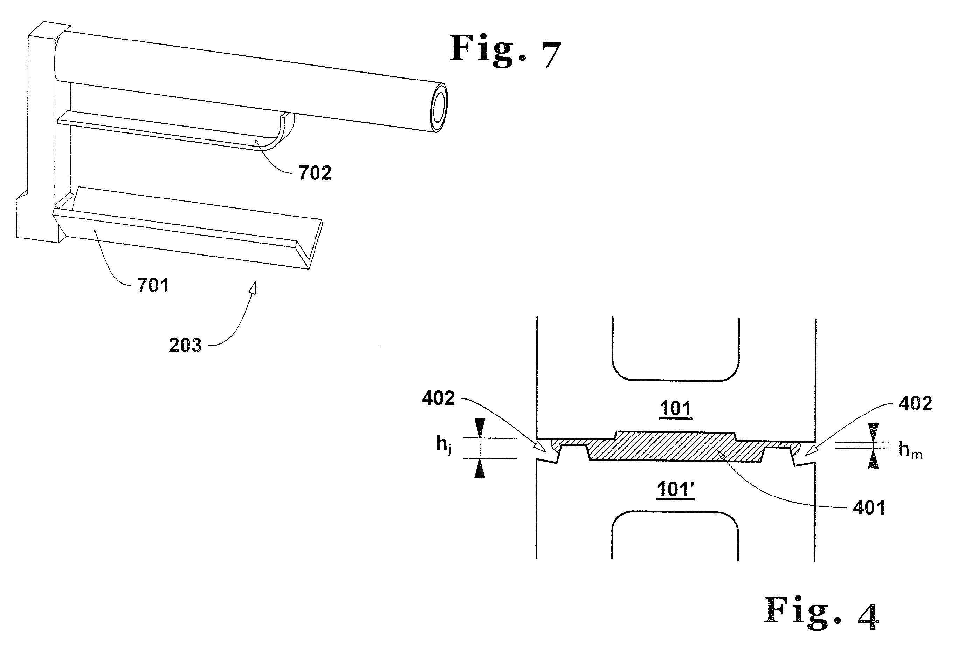

Tournant maintenant vers la Figure 4, l'objet de ces nervures 121,122 dans un procédé de construction d'un mur selon l'invention est le suivant :

Lors de la construction d'un mur à l'aide de tels éléments de construction 101,101' pourvus de nervures 121,122, le maçon va appliquer une masse de mortier 401 sur la première face 111 d'un élément de construction 101', où sont situées les nervures 121,122. Appliquer la masse de mortier 401 sur cette première face 111 est avantageux, car la présence de ces nervures 121,122 permet de mieux positionner et doser le mortier. Les nervures 121,122 vont ainsi être de part et d'autre de la masse de mortier 401 qui forme un joint de mortier entre les éléments de construction 101,101'. Ce joint possède, dans cet exemple particulier avec des nervures 121,122 d'une hauteur hₙᵢ de 7 à 8 mm, une épaisseur finale supérieure à 8 mm. Plus généralement l'épaisseur finale devra être au moins 6 mm. Après avoir appliqué le mortier sur l'élément de construction 101', le maçon va positionner l'élément de construction 101 au-dessus de l'élément de construction 101' et les nervures 121,122 seront alors au moins partiellement noyées dans le mortier après la pose de l'élément de construction 101, comme l'illustre la Figure 4. Toutefois, l'épaisseur hⱼ du joint entre la deuxième face 112 de l'élément de construction 101 et le fond du creux 123 dans la première face 111 de l'élément de construction 101' est supérieure à la hauteur hₙᵢ des nervures 121,122, laissant donc une fine couche de mortier d'une épaisseur hₘ= hⱼ - hₙᵢ entre les nervures 121,122 de l'élément de construction 101' et la deuxième face 112 de l'élément de construction 101. Cette épaisseur hₘ sera variable en fonction des tolérances de fabrication. De préférence, cette épaisseur hₘ est située dans une plage située entre 1 et 3 mm, et restera généralement inférieure à la hauteur hₙᵢ des nervures 121,122. Ceci permet un réglage de l'alignement et de l'aplomb des éléments de construction 101,101' dans le mur. La hauteur hₙᵢ des nervures 121,122 sera donc fonction de l'épaisseur hⱼ de joint désirée et toujours inférieure à celle-ci.

L'espace entre les nervures 121,122 de l'élément de construction 101' et la deuxième face 112 de l'élément de construction 101 opposé est complètement ou partiellement rempli de mortier. Lors de la pose par le maçon, le poids de l'élément de construction 101 va faire de sorte que cet élément va s'enfoncer dans le mortier. Les nervures 121,122, qui par leurs dimensions et structures plus rigides que celles du mortier à l'état pâteux, coopère majoritairement, par rapport au mortier à l'état pâteux, au transfert de la charge de l'un élément de construction 101 vers l'autre élément de construction 101'. Ces nervures 121,122 vont au moins partiellement se noyer dans le mortier ne laissant qu'une faible épaisseur hₘ de mortier entre la deuxième face 112 de l'un élément de construction 101 et les nervures 121,122 de l'autre élément de construction 101'. Lorsque le maçon va taper avec sa truelle sur l'élément de construction après l'avoir posé, afin d'ajuster son alignement et son aplomb, le mortier sera chassé dans des espaces situés entre les éléments de construction 101,101' adjacents aux cinquième et sixième faces 115,116 et formant des faux joints 402.

Puisque l'épaisseur hₘ de la couche de mortier entre la deuxième face 112 de l'élément de construction 101 et les nervures 121,122 de l'autre élément de construction 101' est faible, cette épaisseur hₘ de mortier va durcir plus vite, permettant ainsi au mur en construction de se stabiliser plus rapidement et donc au maçon de monter rapidement en hauteur lors de la construction du mur. Le fait de limiter l'épaisseur du mortier n'altère pas les possibilités de réglage, car cette épaisseur hₘ est choisie telle qu'elle permet de rattraper la tolérance de fabrication des éléments de construction 101,101'.

Il faut également noter que la stabilité d'un mur qui vient tout juste d'être construit dépend de l'épaisseur de la couche de mortier entre les rangées d'éléments de construction 101,101', de la fluidité du mortier, du poids des éléments de construction 101,101' et de leur surface de pose. Puisque les nervures 121,122 coopèrent majoritairement au transfert de la charge par rapport au mortier à l'état pâteux, et que hₘ < hⱼ réduit la possibilité d'expulsion du mortier vers l'extérieur du mur, ces deux caractéristiques contribuent ensemble à améliorer la stabilité du mur en construction. De plus, comme les nervures 121,122 sont fabriquées dans la matière de l'élément de construction 101,101', elle possède une structure plus rigide que celle du mortier à l'état pâteux, ce qui favorise la rigidité du mur en construction.

Dans le mode de réalisation illustré dans la Figure 1, la deuxième face 112 de l'élément de construction 101 comporte un deuxième creux 126 ayant la forme d'une cannelure avec une largeur de entre 25 et 300 mm et une profondeur maximale h_{c} entre 3 et 15 mm. Il est à noter que les nervures 121,122 ne sont pas destinées à entrer dans le deuxième creux 126, puisque ce dernier est décalé par rapport aux nervures 121,122. Lors de la pose de l'un élément de construction 101 sur la masse de mortier 401 et l'autre élément de construction 101' ce deuxième creux 126 va aussi être complètement ou partiellement rempli de mortier. De cette façon, quand le mortier aura pris, il opposera une résistance au cisaillement aux forces latérales auxquelles sera soumis le mur.

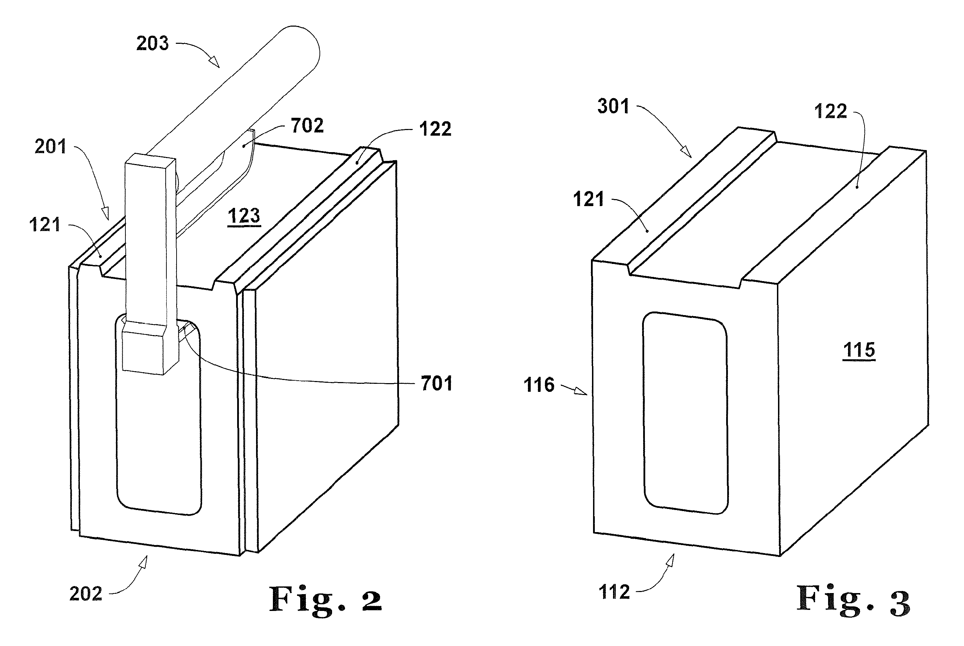

Il est toutefois possible de se passer de ce deuxième creux 126, comme dans le mode de réalisation illustré dans la Figure 2, simplifiant la production de l'élément de construction 201. Dans ce mode de réalisation alternatif, le mortier n'opposera toutefois qu'une résistance d'adhésion aux forces latérales entre des éléments de construction 201.

Dans le mode de réalisation illustré dans la Figure 1, chaque nervure 122,121 est décalée respectivement de la cinquième face 115 et de la sixième face 116, par une distance dⱼ entre 10 et 15 mm dans l'axe de la largeur d, une surface d'égouttage 128 orientée sensiblement parallèlement à l'axe de la longueur I joignant chacune desdites nervures 122,121 et respectivement ladite cinquième ou sixième face 115,116. Cette surface d'égouttage 128 formant préférablement un angle α entre 5° et 15° avec l'axe de la largeur d. Cet angle α sert notamment à diriger de l'eau qui tomberait le long de la panneresse de l'élément de construction 101 vers un fond du faux joint 402 entre deux éléments de construction 101,101' et d'éviter ainsi que cette eau emporte du mortier frais qui viendrait alors s'étaler sur au moins une face visible du mur en construction.

La hauteur hₙₑ de chacune des nervures 121,122 par rapport aux arêtes formées par les surfaces d'égouttage 128 et, respectivement, les sixième et cinquième faces 116,115, ensemble avec l'épaisseur de mortier hm, définira l'épaisseur apparente du faux joint 402. Dans cet exemple, chacune des nervures 121,122 a une hauteur hₙₑ entre 7 et 8 mm par rapport aux arêtes, quoique dans d'autres modes de réalisation cette hauteur minimale hₙₑ pourrait être entre 5 et 17 mm. La hauteur hₙₑ de chacune des nervures 121,122 par rapport à l'arête extérieure peut être différente à la hauteur hₙᵢ de la même nervure 121,122 par rapport au fond du premier creux 123 si, par exemple par des raisons esthétiques, on désire donner au faux joint 402 une épaisseur apparente différente à l'épaisseur de joint hⱼ. Les écarts dⱼ et hauteurs hₙₑ de chacune des nervures 121,122 ne sont pas nécessairement identiques l'une à l'autre.

Cette hauteur hₙₑ additionnée à la faible épaisseur hₘ du mortier forment des faux joints horizontaux 402 sur au moins une face visible du mur permettant une hauteur de jointoiement traditionnelle et donc au mur de garder son aspect esthétique traditionnel, en appliquant un mortier de jointoiement sélectionné notamment pour son aspect esthétique dans le faux joint 402.

Ces faux joints horizontaux 402 peuvent être complémentés par des faux joints verticaux formés par des réservations 130 sur au moins un des bords verticaux (c.à.d., sensiblement parallèles à l'axe de la hauteur h) de chaque élément de construction 101, chacune comportant une surface 131 orientée sensiblement parallèlement à l'axe de la hauteur h dans un angle γ avec l'axe de la longueur I entre 75° et 85° et formant une arête verticale avec une des cinquième ou sixième faces 115,116, avec une profondeur Iᵣ dans l'axe de la longueur I entre ladite troisième face 113 et ladite arête verticale entre 5 et 17 mm, et une largeur dᵣ entre 10 et 15 mm.

Toutefois, s'il n'est pas désiré de créer des faux joints horizontaux 402 sur une ou les deux faces d'un mur, les nervures 122 et/ou 121 peuvent ne pas être décalées des cinquième et/ou sixième faces 115,116, comme dans l'élément de construction 301 du mode de réalisation illustré dans la Fig. 3.

Retournant à la Fig. 1, pour alléger l'élément de construction 101 celui-ci peut comprendre au moins un troisième creux 129 ouvert au moins sur la troisième face 113 et occupant une partie substantielle du volume de l'élément de construction 101. Ledit troisième creux 129 est séparé de la cinquième face 115 par une première paroi portante 141 et de la sixième face par une deuxième paroi portante 142. Lesdites première et deuxième parois portantes 141,142 sont destinées à transférer les charges entre les première et deuxième faces 111,112 de l'élément de construction 101. Dans le mode de réalisation illustré dans la Figure 1, les largeurs dₛ de chacune des protubérances 124,125 de la deuxième face 112 opposées aux nervures 121,122 de la première face sont au moins sensiblement égales aux épaisseurs dp de chacune des parois portantes 142,141, lesquelles sont, à leur tour, sensiblement supérieures aux largeurs dₙ des nervures 121,122, pour avoir un transfert des charges bien continu entre les nervures 121,122 et les protubérances opposées 124,125. Pour cette même raison, dans le mode de réalisation illustré dans la Fig. 1, les nervures 121,122 ont une section trapézoïdale, avec deux flancs 127 dont chacun forme un angle β entre 10° et 20° avec l'axe de la hauteur h. Par contre, dans le mode de réalisation illustré dans la Figure 3 il peut être préférable d'avoir des nervures 121,122 à flanc extérieur vertical, de façon à obtenir des surfaces sensiblement plates et dans l'alignement des sixième et cinquième faces 116,115.

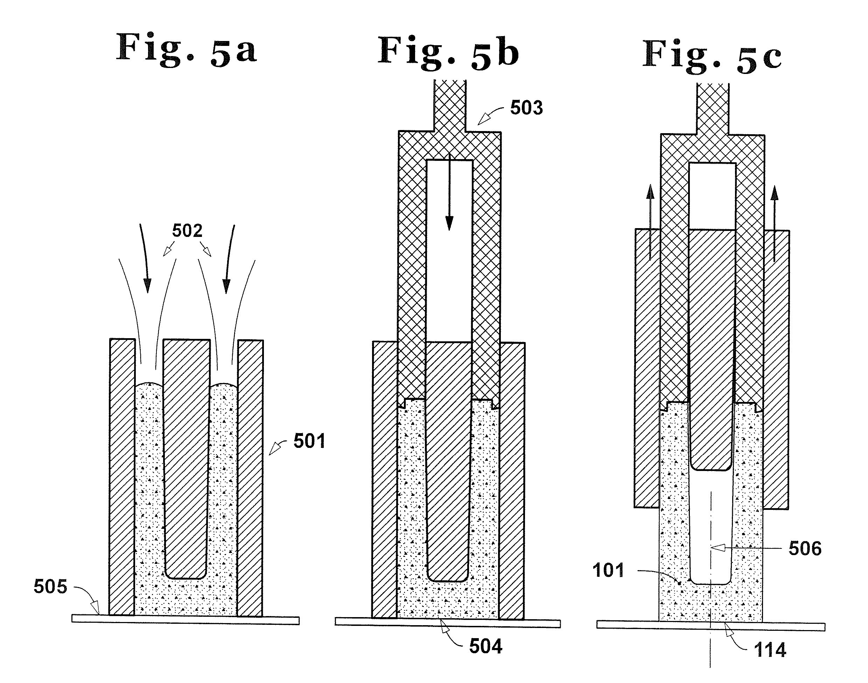

Les Figures 5a-5c illustrent un procédé de production par moulage d'un élément de construction 101. Le matériel, préférablement du béton, destiné à former l'élément de construction 101 est d'abord amené par des ouvertures 502 dans un moule 501 fermé à sa base 504 par une plaque de base 505, tel qu'illustré dans la Fig. 5a. Il est ensuite comprimé par un pilon 503, comme illustré dans la Fig. 5b. Finalement, le moule 501 et la plaque de base 505 se séparent pour que l'élément de construction 101 puisse être extrait du moule 501. Cette extraction peut-être aidée par un mouvement relatif entre le moule 501 et le pilon 503 suivant sensiblement un axe d'extraction 506.

Dû aux tolérances dans le dosage du matériel, les tolérances dimensionnelles de l'élément de construction 101 suivant l'axe d'extraction 506 sont assez larges. Par contre, perpendiculairement à cet axe d'extraction 506 l'élément de construction 101 va épouser très précisément les formes du moule 501, et donc avoir des tolérances dimensionnelles bien plus réduites. Traditionnellement, cet axe d'extraction 506 correspondait à l'axe de la hauteur h des éléments de construction conventionnellement produits par moulage, résultant dans des tolérances de fabrication assez élevées dans l'axe de la hauteur h.

Tandis qu'une hauteur h de l'élément de construction 101 précise est cruciale pour assurer l'alignement aisé des rangées d'éléments de construction 101 et la précision de la largeur d est aussi importante pour assurer que des faces visibles du mur soient bien régulières, la précision dans la longueur I est beaucoup moins cruciale pour la construction du mur. Il est donc bien préférable d'employer un moule 501 dont l'axe d'extraction 506 soit sensiblement aligné avec l'axe de la longueur l de l'élément de construction. Pour pouvoir extraire l'élément de construction 101 du moule 501 sans devoir employer des éléments additionnels et escamotables dans le moule ou sur la plaque de base 505, il faudra que tous les creux de l'élément de construction 101 soient ouverts au moins sur la face de l'élément de construction 101 opposée à la plaque de base 505 quand l'élément de construction 101 est encore dans le moule 501, en l'occurrence la troisième face 113 de l'élément de construction 101.

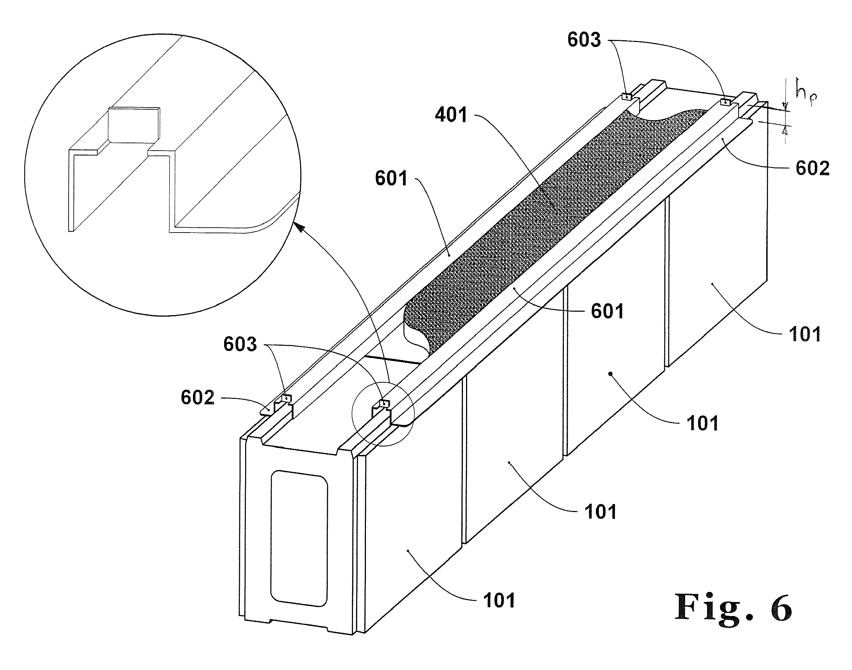

Le dosage de la masse de mortier 401 nécessaire à l'assemblage des éléments de construction 101 peut se faire de manière manuelle par le maçon expérimenté. Toutefois, pour les maçons moins doués, l'utilisation de deux profilés 601 placés à cheval sur les nervures 121,122, comme illustré dans la Fig. 6, permettra de doser parfaitement la quantité de mortier à déposer sur les éléments de construction 101 avant de réaliser l'assemblage de ceux-ci. La hauteur hₚ de ces profilés sera fonction de la hauteur hⱼ des joints souhaitée entre deux éléments de construction 101,101' superposés. Les nervures 121,122 servent de guides de retenue et de coulissement aux profilés 601.

Pour obtenir ce dosage, il suffit de remplir à reflux de mortier l'espace situé entre les deux profilés 601 et d'araser cette masse de mortier 401 avec une truelle ; celle-ci prenant appui sur les deux profilés 601 lors de l'arasement.

Chaque profilé 601 est préférablement muni d'une bavette 602 empêchant le surplus de mortier de retomber lors de l'arasement sur les cinquième ou sixième faces 115,116 de l'élément de construction 101 et donc de les salir.

Chaque profilé 601 est préférablement aussi muni d'au moins un ergot 603 permettant de déplacer le profilé 601 à l'aide de la truelle qui, appliquée latéralement sur l'ergot 603, permettra d'actionner les profilés 601 dans le sens longitudinal du mur, guidés par les nervures 121,122.

L'orientation longitudinale du troisième creux 129 présente aussi des avantages à l'heure de la construction d'un mur avec des éléments de construction suivant cette invention. Grâce à cette forme, il devient possible d'employer un outil tel que la poignée-massette 203, illustrée dans la Figure 7. Retournant vers la Figure 2, on peut voir comment, pour une préhension aisée d'un élément de construction 201, une première partie 701 de la poignée-massette 203 pénètre dans le troisième creux 129 pour soutenir l'élément de construction 201 tandis qu'une deuxième partie 702 sert à protéger la main du maçon et empêche le basculement de l'élément de construction 201 pendant son transport. La poignée-massette 203 peut donc être utilisée pour prendre l'élément de construction 201, le transporter, le déposer et le régler en alignement et aplomb, réduisant le nombre de mouvements nécessaires pour construire un mur.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que descriptif.

### REFERENCES DES FIGURES

- 101: Élément de construction
- 101': Élément de construction
- 111: Première face
- 112: Deuxième face
- 113: Troisième face
- 114: Quatrième face
- 115: Cinquième face
- 116: Sixième face
- 121: Nervure
- 122: Nervure
- 123: Premier creux
- 124: Surface opposée
- 125: Surface opposée
- 126: Deuxième creux
- 127: Surface oblique
- 128: Surface d'égouttement
- 129: Troisième creux
- 130: Réservation
- 131: Surface oblique
- 201: Élément de construction
- 202: Surface opposée
- 203: Poignée massette
- 301: Élément de construction
- 401: Masse de mortier
- 402: Faux joint
- 501: Moule
- 502: Ouvertures
- 503: Pilon
- 504: Ouverture d'extraction
- 505: Plaque de base
- 506: Axe d'extraction
- 601: Profilé
- 602: Bavette
- 603: Ergot
- 701: Première partie de la poignée-massette
- 702: Deuxième partie de la poignée-massette

## Revendications

1. Un élément de construction (101,101',201,301) ayant une longueur I, une largeur d et une hauteur h, dont les axes sont sensiblement perpendiculaires les uns aux autres, ladite longueur I étant préférablement au moins égale à la largeur d, lequel élément de construction (101,101',201,301) comportant :
a) une première face (111) et une deuxième face (112) sensiblement orientées dans des plans parallèles aux axes de la longueur I et de la largeur d, et séparées l'une de l'autre dans l'axe de la hauteur h, ladite première face (111) comportant deux nervures (121,122) orientées sensiblement parallèlement à l'axe de la longueur I, et séparées l'une de l'autre dans l'axe de la largeur d par un premier creux (123); et
b) une troisième face (113) et une quatrième face (114), sensiblement orientées dans des plans parallèles aux axes de la largeur d et de la hauteur h, et séparées dans l'axe de la longueur l ;
**caractérisé en ce que** chaque nervure (121,122) a une hauteur hₙᵢ située entre 5 et 17 mm, préférablement entre 7 et 8 mm, mesurée par rapport au fond dudit premier creux (123) et **en ce que** ledit premier creux (123) est ouvert au moins sur ladite troisième face (113).

2. Un élément de construction (101,101') selon la revendication 1, **caractérisé en ce que** ladite deuxième face (112) comporte deux protubérances (124,125) séparées par un deuxième creux (126), chacune de ces protubérances étant disposée de façon à être opposée dans une direction parallèle à l'axe de la hauteur h chaque fois à une des deux nervures (121,122).

3. Un élément de construction (101,101') selon la revendication 2, **caractérisé en ce que** ledit deuxième creux (126) a une largeur de entre 25 et 300 mm et/ou une profondeur maximale h_{c} entre 3 et 15 mm.

4. Un élément de construction (201,301) selon la revendication 1, **caractérisé en ce que** ladite deuxième face (112) comporte une surface (202) sensiblement continue opposée dans l'axe de la hauteur h et enjambant les deux nervures (121,122).

5. Un élément de construction (101,101',201) selon une des revendications précédentes, **caractérisé en qu'**il comporte aussi une cinquième face (115) et une sixième face (116), sensiblement orientées dans des plans parallèles aux axes de la hauteur h et la longueur l, et séparées l'une de l'autre dans l'axe de la largeur d, au moins une desdites nervures (122,121) étant décalée par rapport à la cinquième ou sixième face (115,116) par une distance dⱼ entre 10 et 15 mm dans l'axe de la largeur d.

6. Un élément de construction (101,101',201) selon la revendication 5, **caractérisé en ce que** une surface d'égouttage (128) orientée sensiblement parallèlement à l'axe de la longueur I s'étend entre au moins une desdites nervures (122,121) et ladite cinquième ou sixième face (115,116), cette surface d'égouttage (128) formant préférablement un angle α entre 5° et 15° avec l'axe de la largeur d.

7. Un élément de construction (101,101',201) selon la revendication 6, **caractérisé en ce qu'**au moins une desdites nervures (121,122) a une hauteur minimale hₙₑ entre 5 et 17 mm, préférablement 7 et 8 mm relativement à la surface d'égouttage (128).

8. Un élément de construction (101,101',201,301) selon une des revendications précédentes, **caractérisé en ce que** ladite troisième face (113) comporte au moins un troisième creux (129).

9. Un procédé pour produire par moulage un élément de construction (101, 101', 201, 301) selon une des revendications précédentes, **caractérisé en ce que** ledit élément de construction (101,101',201,301) est extrait d'un moule dans un mouvement orienté sensiblement dans l'axe de la longueur I dudit élément de construction (101,101',201,301) vers la quatrième face (114).

10. Un procédé selon la revendication 9, **caractérisé en ce qu'**il comporte une étape où du béton est amené sensiblement dans l'axe de la longueur I dudit élément de construction (101,101',201,301) à former dans ledit moule.

11. Un procédé selon la revendication 10, **caractérisé en ce que** le béton est comprimé dans le moule avec un pilon (503), ledit pilon (503) se déplaçant sensiblement dans l'axe de la longueur I dudit élément de construction (101,101',201,301) à former.

12. Un procédé de construction d'un mur comportant une pluralité d'éléments de construction (101,101',201,301) selon une des revendications 1 à 11, suivant lequel on superpose un desdits éléments de construction (101) et un autre desdits éléments de construction (101') de façon à opposer au moins partiellement la deuxième face (112) de l'un élément de construction (101) à la première face (111) de l'autre élément de construction (101') après avoir appliqué une masse de mortier (401) entre le premier creux (123) dudit autre élément de construction (101') et la deuxième face (112) dudit un élément de construction (101), afin d'obtenir un joint de mortier entre ledit premier creux (123) de l'autre élément de construction (101') et ladite deuxième face (112) de l'un élément de construction (101), **caractérisé en ce que** l'épaisseur hⱼ dudit joint de mortier est supérieure à la hauteur hₙᵢ des nervures (121,122) dudit autre élément de construction (101'), la masse de mortier (401) débordant dudit premier creux (123) de l'autre élément de construction (101') pour former une fine couche de mortier entre la deuxième face (112) de l'un élément de construction (101) et lesdites nervures (121,122) de l'autre élément de construction (101') et afin de permettre un réglage de l'alignement et de l'aplomb des éléments de construction (101,101') pendant que le mortier reste fluide tout en équilibrant les éléments de construction et évitant le tassement du joint.

13. Un procédé selon la revendication 12, **caractérisé en ce qu'**un surplus de mortier débordant au-delà d'au moins une desdites nervures (121,122) est ensuite retiré avec un instrument plat.

14. Un procédé selon une des revendications 12 ou 13, **caractérisé en ce que** un profilé (601) avec une hauteur hp est placé à cheval sur chacune des deux nervures (121,122) de l'autre élément de construction (101'), ladite hauteur hp desdits profilés (601) étant supérieure à la hauteur hₙᵢ desdites nervures (121,122), et **en ce que** ladite masse de mortier (401) est dosée en remplissant un espace entre les deux profilés (601) avec du mortier et arasant ce mortier avec une truelle prenant appui sur lesdits deux profilés (601).

15. Un procédé selon la revendication 14, **caractérisé en ce que** lesdits deux profilés sont munis de bavettes (602) destinées à être placées vers l'extérieur de l'élément de construction (101') pour recevoir un surplus de mortier lors de l'arasement.

16. Un procédé selon une des revendications 14 ou 15, **caractérisé en ce que** chacun desdits deux profilés (601) est muni d'au moins un ergot (603) pour déplacer lesdits deux profilés dans l'axe de la longueur l de l'autre élément de construction à l'aide de ladite truelle.

17. Un procédé selon une des revendications 12 à 16, **caractérisé en ce qu'**une poignée-massette (203) est utilisée pour prendre au moins l'un élément de construction (101) avant de le positionner au-dessus de l'autre élément de construction (101'), ladite poignée-massette (203) comportant une première partie (701) qui est au moins partiellement introduite dans le troisième creux (129) de l'un élément de construction (101) pour le soutenir.

18. Un mur construit suivant le procédé selon une des revendications 12 à 17.
